# EUROPEAN PATENT APPLICATION

(11) **EP 1 116 464 A1**
(43) Date of publication of application: **18.07.2001**
(21) Application number: 01200063.4
(22) Date of filing: 10.01.2001
(51) Int. Cl.: A47J 31/40

(54) **Instant drinks machine, in particular for coffee, and method for the preparation of an instant drink, such as coffee**

(30) Priority: 10.01.2000 NL 1014046
(71) Applicant: Bravilor Holding B.V., 1700 AD Heerhugowaard (NL)
(72) Inventor: Roet, Frank Petrus Nicolaas, 1723 CH Noord-Scharwoude (NL)
(74) Representative: Jorritsma, Ruurd

(57) **Abstract**

The invention relates to a instant drinks machine (1), in particular for coffee, comprising a mixing unit (9) for combining an instant powder (5) and liquid, to produce a mixture, and a dispensing system (10), connected to the mixing unit (9), for dispensing the mixture. The dispensing system (10) is provided with a sieve (22) which completely covers the passage in the dispensing system (10), so that all of the mixture has to pass through the sieve (22). The sieve (22) is provided with movement means for making the sieve (22) move, for example rotate about an axis of rotational symmetry. The invention further relates to a method for the preparation of an instant drink, such as instant coffee, with which an instant powder (5) and a liquid, such as warm or hot water, are combined to form a mixture, the mixture is fed through a sieve (22), and the mixture passed through the sieve (22) is fed into a drinks container (12), the sieve (22) being made to move, for example rotate about an axis of rotational symmetry.

## Description

The present invention relates to an instant drinks machine, such as, in particular, for coffee, comprising a mixing unit for combining an instant powder and liquid, to produce a mixture, and a dispensing system, connected to the mixing unit, for dispensing the mixture.

An instant drinks machine of this type is generally known. The mixing unit frequently consists of a funnel-shaped mixing beaker to which, on the one hand, warm or hot water and, on the other hand, an instant powder, such as instant coffee powder, are fed, which mixture is then fed via a dispensing system to a dispenser in order, via the dispenser, to pass into a drinks container, such as a beaker.

A known problem with such known instant drinks machines is that frequently not all the powder dissolves completely in the liquid. This has the result that undissolved granules of the instant powder pass into the drink. If the granules settle out in the final drinks container, such as a beaker, the problem is experienced as less serious since the consumer usually does not discern these granules, or discerns them only when the drinks container has been completely emptied. The granules that have settled out can, moreover, dissolve even further while the consumer is drinking the drink, which reduces the likelihood that the consumer detects these granules, in the case of settling out. However, in the case of, inter alia, instant coffee, a layer of foam is often to be seen on the surface in the drinks container, such as a cup or beaker. This layer of foam is usually caused by air that passes into the water with the instant powder and then rises to the surface in the form of small bubbles, where it forms the layer of foam. This layer of foam is generally of a lighter colour than the drink, or at least of a lighter colour than the instant powder. In the case of a layer of foam, the undissolved granules easily remain on top of the layer of foam and can then be clearly seen by the consumer as black spots or pits. This is certainly undesirable because the aim with the instant coffee is precisely as far as possible to approach the extract of coffee brewed from ground coffee beans, not only in respect of taste and odour, but also in respect of appearance. The layer of foam itself is in general not so objectionable, since this can also be present with coffee brewed from ground coffee beans and is sometimes even regarded as evidence of good quality.

It is known per se, in accordance with the precharacterising clause of Claim 1, to provide the dispensing system with a sieve which covers the entire opening in the dispensing system. US-A 5 931 343 discloses an instant drinks machine provided with such a sieve, in accordance with the precharacterising clause of Claim 1, as well as a method in accordance with the precharacterising clause of Claim 8.

In this context, covering completely is understood in particular to mean that the sieve is of such construction and/or is placed in the dispensing system in such a way that essentially the entire mixture passed through the dispensing system passes through the sieve or at least ought to pass through the latter. The sieve retains the undissolved granules of instant powder, which leads to the product, i.e. the drink, supplied to the consumer being free, or at least possibly being free, from undissolved granules of instant powder.

The instant drinks machine according to US-A 5 931 343 has a mixing chamber (42) which is provided with instant powder from a hopper (32) and with hot water via a line (32). The mixing chamber (42) opens into a beating chamber (64) with rapidly rotating beater blades. The beating chamber (64) opens onto a buffer vessel (44) from where the instant drink is able to flow via a dispenser valve (50) into a beaker (56). A filter basket (70) with a fine-mesh sieving screen is positioned around the dispenser valve. The purpose of the filter basket in US-A 5 931 343 is to intercept and retain undissolved sugar particles; see column 6, lines 1 - 6. Because the sugar particles are retained, they will better further dissolve in the liquid flowing over them. However, such a sieve has the disadvantage that it can become clogged, which will occur in particular if the drink mixture still contains undissolved granules of instant powder. Clogging can, for example, arise because the undissolved granules are difficult to dissolve further or because retained undissolved granules dry out in the sieve while the instant drinks machine is out of use. As will be clear, clogging can lead to malfunction and will necessitate frequent maintenance of the sieve.

The aim of the present invention is to provide an improved instant drinks machine, in particular an instant drinks machine for coffee, that operates reliably and with which the occurrence of undissolved granules in the drink presented to the consumer is counteracted and preferably is completely eliminated.

Said aim is achieved according to the invention in that the sieve is provided with movement means for making the sieve move. As a result of providing the sieve with movement means for making it move, it is possible to bring the sieve into movement while mixture is flowing through the dispensing system, by which means contact between undissolved granules retained by the sieve and the liquid in the mixture is improved and these retained undissolved granules are still able to dissolve. In this context it has been found to be particularly advantageous according to the invention if the movement means are equipped to move the sieve with at least one movement component transverse to the direction of flow through the dispensing system or the sieve. Specifically, with this arrangement the intimate contact between the retained undissolved granules and the liquid passing through the sieve is improved and, consequently, the possibility of bringing said retained granules into solution is also improved. As far as the movement means are concerned, consideration can be given, for example, to a so-called vibratory sieve. The sieve, which can then be, for example, a rectangular piece of gauze, which locally covers the entire passage through the dispensing system, can then, for example, be brought into a back-and-forth vibratory movement in the dispensing system, transversely to the direction of flow through said system.

From the standpoint of construction engineering it has proved highly advantageous according to the invention if the sieve is rotationally symmetrical about an axis of rotational symmetry and if the movement means comprise a rotary drive, the axis of rotation of which is coincident with the axis of rotational symmetry of the sieve. The sieve is then mounted as a sort of rotor in the dispensing system and it should be clear that this is structurally simple to implement in many diverse ways.

According to a further advantageous embodiment of the invention, the sieve is fixed on the drive shaft of a rotary mixer provided in the dispensing system or on the mixing element of a rotary mixer provided in the dispensing system. Such a rotary mixer or such a mixing element is in practice usually present in the dispensing system. Such a rotary mixer can be, for example, a disc with ribs arranged thereon. In practice, rotary mixers of this type are used, inter alia, to beat air into the drink or to distribute solid, undissolved constituents, in general very fine constituents, better through the liquid. In the case of instant coffee, practice shows, however, that such a rotary mixer as such is not sufficient to prevent the presence of undissolved granules of instant coffee on the layer of foam. If a rotary mixer, or at least a rotary mixing element, is in practice already present in the dispensing system, it can then suffice to mount the sieve on the drive shaft of said rotary mixer or, optionally, on the mixing element itself. The additional component required for the instant drinks machine according to the invention compared with the prior art is then in fact only the sieve. Although the sieve can also be positioned downstream of the rotary mixer, positioning of the sieve upstream of the rotary mixer has the advantage that undissolved granules which have initially been retained by the sieve and, after having dissolved sufficiently to pass through the sieve, have passed through the sieve can be brought yet further into solution under the influence of the rotary mixer.

In the case of the embodiment with a rotary sieve, it is preferable according to the invention if the external peripheral edge of the sieve abuts the inside wall of the dispensing system to produce a seal. The reason for this is to prevent part of the mixture of liquid and instant powder being able to by-pass the sieve on the outside and thus not being subjected to the sieving effect of the sieve.

In the case of the embodiment with a rotary drive, practice has shown that good results are already achieved with speeds of rotation of 1000 revolutions/minute or even lower. The solubility of undissolved granules retained by the sieve is in particular also found to be good at higher speeds of rotation of the sieve, such as, for example, 4,000, 5,000, 10,000 or optionally even more revolutions per minute.

The Applicant has found experimentally that sieves with a mesh width greater than 0.5 mm do not readily clog in practice. Furthermore, the Applicant has found experimentally that the mesh width of the sieve can be up to approximately 1 mm for adequate retention of undissolved granules of instant powder, in particular instant coffee powder. According to an advantageous embodiment of the invention, the mesh size of the sieve is in the range from 0.6 to 0.9 mm.

According to a further aspect, the invention relates to a method for the preparation of an instant drink, such as, in particular, instant coffee, with which:
- an instant powder and a liquid, such as warm or hot water, are combined to form a mixture,
- the mixture is fed through a sieve, and
- the mixture passed through the sieve is fed into a drinks container, characterised in that the sieve is moved while the mixture is being passed through. This movement will preferably take place in such a way that the sieve has a movement component transverse to the direction of flow through the sieve or transverse to the direction of flow through the channel in which the sieve is accommodated. In an advantageous embodiment of the method according to the invention the sieve is rotated. In this case the sieve will preferably have an axis of rotational symmetry and will be rotated about said axis of rotational symmetry.

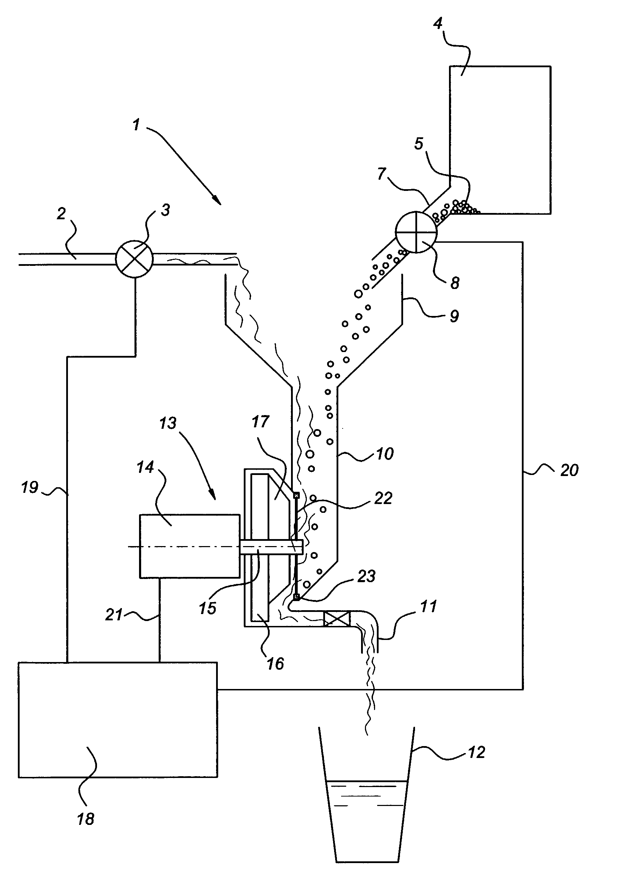

The present invention will be explained in more detail below with reference to an illustrative embodiment shown diagrammatically in the drawing.

Only that part of the instant drinks machine according to the invention that is of relevance for the present invention is shown diagrammatically in the illustrative embodiment. This part of the drinks machine essentially relates to the part where the liquid, in general warm or hot water, is combined with the instant powder to form a mixture. Before the liquid and the instant powder are combined to form the mixture it is, of course, possible for one or both of these also to be subjected to one or more pretreatments, such as warming or heating in the case of water.

The instant drinks machine 1 shown diagrammatically in the drawing has a feed line 2 for warm, hot or cold water, which line 2 is provided with a controllable regulating valve 3 for measuring out the correct quantity of water. The drinks machine 1 shown diagrammatically further comprises at least one storage container 4 for instant ingredient 5 in powder form, to which storage container 4 a line 7 is connected which is provided with a controllable regulating element 8 by means of which the supply and quantity of instant powder is controllable. The liquid feed line 2 and instant powder feed line 7 both open into a so-called mixing beaker 9, which is shown in funnel form here but could equally well be replaced by a different type of mixing unit. A dispensing system 10 is connected to the mixing beaker 9, via which dispensing system 10 the mixture of liquid and pulverulent instant ingredient 5 brought together in the mixing beaker 9 is fed further, with or without further treatment, to the outlet 11 via which the product, the drink, is dispensed into a drinks container, such as a cup, beaker or can 12, available to the consumer. As is known per se from the prior art, a rotary mixer 13, consisting of an electric drive rotor 14 with driven shaft 15 and a circular disc 16, provided with ribs 17, mounted thereon, is provided in the dispensing system 10. The disc 16 with ribs 17 forms the mixing element of the rotary mixer. This mixing element is usually rotated at a high speed of revolution, for example 10,000 revolutions per minute, for diverse purposes, for example in order to beat air into the drink or better to distribute solid insoluble constituents throughout the entire liquid, such as plays a role in the case of cocoa, for example. The drinks machine shown also comprises a control unit 18 that is connected via a signal line 19 to the regulating valve 3 in the liquid feed line 2, is connected via a signal line 20 to the regulating element 8 in the instant powder feed line 7 and is connected via the signal line 21 to the drive motor 14 of the rotary mixer 13. From the control unit 18 control signals can be transmitted to the regulating valve 3 and the regulating element 8 to allow a predetermined, suitable quantity of liquid and, respectively, instant powder to pass through and a control signal can be transmitted to the motor 14 to make the drive shaft 15, with the components mounted thereon, rotate when mixture flows through the dispensing system 10. The various features are simple to implement by equipping the control unit 18 in a suitable manner.

In accordance with the invention a sieve 22 is provided in the dispensing system 10. The sieve 22 is mounted in the dispensing system 10 in such a way that the mixture to be fed through the dispensing system 10 is forced to pass through the sieve, or the sieve 22 is mounted in the dispensing system 10 in such a way that it locally covers the entire passage in the dispensing system 10. The sieve 22 is advantageously mounted on the drive shaft 15 of the rotary mixer, although it must be pointed out that the mixing elements 16, 17 optionally also could be omitted completely. What is important with this embodiment in particular is that the sieve 22 is a sieve body with rotational symmetry, for example a flat circular disc, and that the axis of rotational symmetry of the sieve is coincident with the axis of rotation of the drive shaft 15, such that the sieve 22 can be rotated by the drive shaft 15 at, for example, 10,000 revolutions/minute. Because the sieve 22 is rotated, granules collected in the sieve or retained by the sieve are brought into intimate contact with the mixture, in particular the liquid, so that these granules are nevertheless forced to dissolve. What can be achieved in this way is that the sieve 22 remains completely clean and does not become clogged as a result of, for example, retained granules drying out while the drinks machine is stationary, under which circumstances the dispensing system 10 will, in fact, be dry.

The sieve 22 is preferably provided with a peripheral edge 23 which acts in conjunction with the inside wall of the dispensing system 10 at the location of the sieve 22 to provide a seal.

The sieve, as such, can be a grating of wires between which square or rectangular passages, the meshes, are left open. According to the invention, these passages advantageously have a passage width or size, the so-called mesh size, of 0.6 to 0.9 mm.

It should be clear that within the scope of the invention, as defined in the claims, numerous modifications and variants of the instant drinks machine shown in the drawing are also possible. For instance, it is, for example, possible that multiple water feed lines 22 and/or multiple instant powder feed lines 7, with storage containers 4 connected thereto, open into the mixing beaker 9. It is furthermore possible, as already indicated, that there is no rotary mixing element 16, 17 whatsoever except for a rotary sieve 22. It is also possible to make the sieve 22 move by, for example, moving this at high frequency back and forth in the plane of the sieve instead of making this rotate or in addition to making it rotate. The mixing beaker 9 can also be replaced by a different type of mixing unit, the important point being that the mixture produced by combining liquid and instant powder is fed through the sieve according to the invention.

## Claims

1. Instant drinks machine, such as, in particular, for coffee, comprising a mixing unit for combining an instant powder and liquid, to produce a mixture, and a dispensing system, connected to the mixing unit, for dispensing the mixture, the dispensing system being provided with a sieve which completely covers the passage in the dispensing system, characterised in that the sieve is provided with movement means for making the sieve move.

2. Instant drinks machine according to Claim 1, characterised in that the movement means are equipped to move the sieve with at least one movement component transverse to the direction of flow through the dispensing system or the sieve.

3. Instant drinks machine according to Claim 1 or Claim 2, characterised in that the sieve is rotationally symmetrical about an axis of rotational symmetry and in that the movement means comprise a rotary drive, the axis of rotation of which is coincident with the axis of rotational symmetry of the sieve.

4. Instant drinks machine according to one of Claims 1 - 3, characterised in that the sieve is fixed on the drive shaft of a rotary mixer provided in the dispensing system or on the mixing element of a rotary mixer provided in the dispensing system.

5. Instant drinks machine according to Claim 3 or Claim 4, characterised in that the external peripheral edge of the sieve abuts the inside wall of the dispensing system to produce a seal.

6. Instant drinks machine according to one of Claims 3 - 5, characterised in that the rotary means are equipped to rotate at a speed of at least 1,000 revolutions per minute, preferably at at least 4,000 revolutions per minute, for example at 10,000 revolutions per minute or more.

7. Instant drinks machine according to one of the preceding claims, characterised in that the mesh size of the sieve is 0.6 to 0.9 mm.

8. Method for the preparation of an instant drink, such as, in particular, instant coffee, with which:
- an instant powder and a liquid, such as warm or hot water, are combined to form a mixture,
- the mixture is fed through a sieve, and
- the mixture passed through the sieve is fed into a drinks container,
characterised in that the sieve is moved while the mixture is being passed through.

9. Method according to Claim 8, wherein the movement of the sieve takes place in such a way that the sieve has a movement component transverse to the direction of flow through the sieve or transverse to the direction of flow through the channel in which the sieve is accommodated.

10. Method according to Claim 8 or Claim 9, wherein the sieve is rotated.

11. Method according to Claim 10, wherein the sieve has an axis of rotational symmetry and in that it is rotated about said axis of rotational symmetry.
